# EUROPEAN PATENT SPECIFICATION

(11) **EP 4 300 388 B1**
(45) Date of publication and mention of the grant of the patent: **06.08.2025**
(21) Application number: 23180761.1
(22) Date of filing: 21.06.2023
(51) Int. Cl.: G06Q 10/06, G05B 19/042, G06F 16/23, G06F 16/2455, G06Q 10/0631, G06Q 40/12, G06Q 10/0635, G06Q 10/0637, G06Q 10/087, G06Q 30/0201, G06Q 30/0601, G06Q 30/08, G06Q 50/18

(54) **LARGE LINE ITEM EVENT PROCESSING SYSTEM**
EREIGNISVERARBEITUNGSSYSTEM FÜR GROSSE LINIENELEMENTE
SYSTÈME DE TRAITEMENT D'ÉVÉNEMENTS D'ARTICLES À GRANDE LIGNE

(30) Priority: 27.06.2022 IN 202211036710; 12.08.2022 US 202217886733
(43) Date of publication of application: 03.01.2024
(73) Proprietor: SAP SE, 69190 Walldorf (DE)
(72) Inventor: Ahuja, Monika, Walldorf (DE); Rao, Ranjith Pavanje Raja, Walldorf (DE); Choudhary, Ganesh, Walldorf (DE)
(74) Representative: Müller-Boré & Partner Patentanwälte PartG mbB

(56) References cited:
- EP-A1- 3 165 982
- US-A1- 2014 149 170
- US-B2- 11 216 444

## Description

### CLAIM OF PRIORITY

The present patent application claims the priority benefit of the filing date of Indian Provisional Application No. 202211036710 filed June 27, 2022.

### BACKGROUND

Strategic sourcing can be performed by a company to monitor and evaluate sourcing strategies. Sourcing strategies can include determining from which entity to purchase items that need to be procured. Strategic sourcing can include supply chain management, supplier development, contract negotiation, and outsourcing evaluation.
US 11 216 444 B2 describes systems, methods, and computer-readable media for event sourcing datastores. Events are sent to an event sourcing datastore (ESDS) from an external service, and the events are appended to an event log. The ESDS maintains the event log in one table and the events are automatically aggregated via streaming. The ESDS is linearly scalable, and enforces uniqueness, consistency, and user-defined constraints when appending events to the event log. The aggregate state is computed asynchronously and transparently cached, which provides increased read throughput and reduced latency.

### SUMMARY

The invention is set out in the appended set of claims. Particular embodiments are the subject of the dependent claims.

### BRIEF DESCRIPTION OF DRAWINGS

The present disclosure is illustrated by way of example and not limitation in the figures of the accompanying drawings, in which like references indicate similar elements.
Figure 1 is a diagram illustrating a lifecycle of an LLI event, in accordance with an example embodiment.
Figure 2 is a block diagram illustrating a system for processing LLI events in accordance with an example embodiment.
Figure 3 is a block diagram illustrating a data model used by the document database, in an example embodiment.
Figure 4 is a screen capture illustrating a graphical user interface for adding line items to an LLI event, in accordance with an example embodiment.
Figure 5 is a screen capture illustrating a graphical user interface for adding terms to a line item of an LLI event, in accordance with an example embodiment.
Figure 6 is a screen capture illustrating a graphical user interface for adding line item information in accordance with an example embodiment.
Figure 7 is a screen capture illustrating a graphical user interface for publishing a created report, in accordance with an example embodiment.
Figure 8 is a screen capture illustrating a graphical user interface for viewing a report about data recorded via an LLI event, in accordance with an example embodiment.
Figure 9 is a flow diagram illustrating a method of handling a request for an operation corresponding to an LLI event, in accordance with an example embodiment.
Figure 10 is a block diagram illustrating a software architecture, which can be installed on any one or more of the devices described above.
Figure 11 illustrates a diagrammatic representation of a machine in the form of a computer system within which a set of instructions may be executed for causing the machine to perform any one or more of the methodologies discussed herein.

### DETAILED DESCRIPTION

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

Organizations may wish to procure item(s) for the organization. For example, an organization may wish to find a supplier who can provide the item(s) at the lowest price. Other factors can influence selection of a supplier, such as past interactions, overall reputation, delivery time factors, etc. Strategic sourcing can be a process for trying to find a best supplier for the organization for a set of one or more items that the organization wants to procure. After performing the strategic analysis, a supplier can be selected and awarded a sourcing opportunity.

An input to strategic sourcing can be a sourcing event that includes a list of line item(s) that the organization wants to procure. Line items for a sourcing event can be defined using a user interface that has fixed fields into which values for line items can be added. The data pertaining to the sourcing event is then stored in a relational database for later retrieval for subsequent sourcing events and/or analysis.

A technical issue, however, is encountered for sourcing events that have a large amount of data. Users expect for events to be processed within 30 second or less, and sourcing events with large amounts of data (e.g., over 2000 line items and/or over 125 participants) are not able to be processed within that 30 second limit. This is because a server cache will hold up events in memory. Additionally, the fetching of sourcing event data with large amounts of data would also be time consuming. As a result, the fixed field graphical user interface typically will limit input sourcing events to "standard-size"-only, namely sourcing events with fewer than 2000 line items. Large sourcing events, known as Large Line Item (LLI) events, are handled separately via spreadsheet input, and are not stored in the same database as the standard event data, limiting reporting and analysis features.

There is risk, however, in changing the existing core sourcing application, as most events (greater than 90%) are of standard size as opposed to LLI, and the existing core sourcing application is quite stable and effective for such standard-size events.

In an example embodiment, a scalable solution is provided that identifies sourcing events that are large line item events and reroutes requests for operations related to such events to a specialized content service. The specialized content service authenticates the requests and causes data pertaining to the large line item events to be stored in and/or retrieved from a document database for LLI event processing. The result is that operations for LLI events are able to be processed much faster than in prior art solutions.

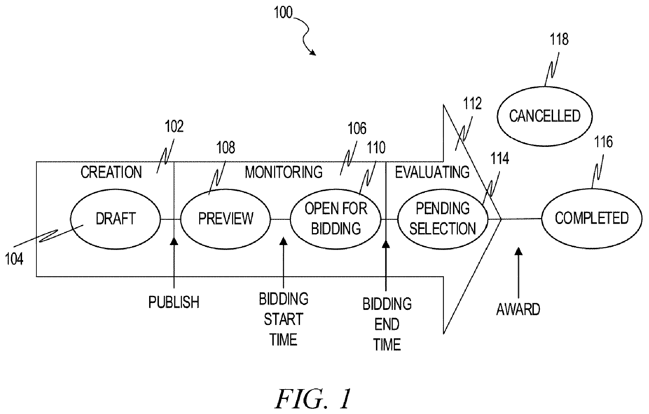

In sourcing, an event proceeds through multiple processing steps, starting with event creation by organizations and ending with a selection to "winning" suppliers. At each stage of the process, the event has a defined status which determines the actions a user can take. Figure 1 is a diagram illustrating a lifecycle 100 of an LLI event, in accordance with an example embodiment. A creation process 102 involves the creation of a draft LLI event 104, which can then be published. A monitoring process 106 involves the previewing 108 of a bidding process as well as event 110 where the LLI event is open for bidding. Once bidding time is over, an evaluation process 112 takes over and a pending selection of a "winner" is made 114. Once the bid has been awarded, a completed event 116 occurs, or if at any point during the monitoring process 106 or evaluation process 112 the bidding is cancelled, a cancelled event 118 occurs.

There are functionalities at each of these event lifecycle stages where large amounts of data must be handled within defined service level agreements (SLAs). For example, an expected SLA for a content upload with 20,000 line items may be 30 seconds, as may be an expected SLA for a bid upload with 20,000 line items. Report generation with 20 supplier bids may have an expected SLA of 2 minutes, with concurrent processing of 200 supplier bids having an expected SLA of 10 minutes.

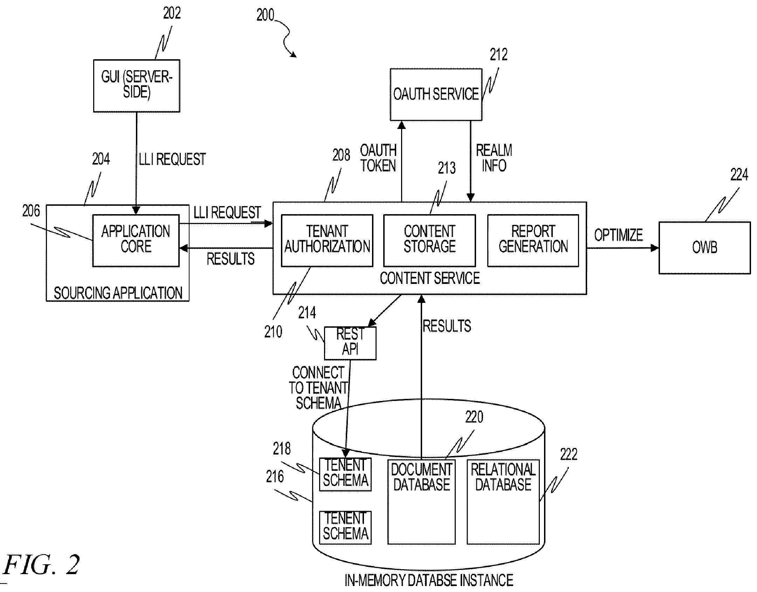

Figure 2 is a block diagram illustrating a system 200 for processing LLI events in accordance with an example embodiment. A graphical user interface 202 may permit users to enter fixed line items for a sourcing event and/or request reporting on a sourcing event. It should be noted that the graphical user interface 202 displayed here may be a server-based graphical user interface, which may communicate with a client device running a client-side portion of a sourcing application 204 to perform the various graphical user interface operations requested. This, however, is not mandatory. In other example embodiments, the graphical user interface 202 may be client-based, and thus may, for example, be contained within the client-side portion of the sourcing application 204.

A user can use the sourcing application 204 to create a sourcing event. A sourcing event can be an auction request, a request for information (RFI), a request for a proposal, or a request for quotation (which can all generically be referred to as RFX (e.g., request for "X")). The sourcing event can be sent from the graphical user interface 202 to the application core 206.

The application core 206 may receive an event request from the graphical user interface 202. Notably, this event request could be a request to provide or utilize data from any of the event lifecycle stages, such as the stages described above with respect to Figure 1. Also notably, the event requests may correspond to standard events or LLI events. In an example embodiment, a standard event is defined as an event involving 2000 or fewer line items, while a LLE event is defined as an event involving more than 2000 line items. This threshold, however, can be different depending upon implementation. For purposes of this disclosure, it is enough that the application core 206 know how to differentiate between a standard event and an LLI event. This is because LLI event processing is going to be abstracted from the integration component into a microservice-based stack that is backed by a document database.

In an example embodiment, the application core 206 may be an S/4 Hana^{™} cloud, from SAP SE of Frankfurt, Germany. S/4 Hana^{™} is a modular cloud enterprise resource processing (ERP) software running with an in-memory database. An in-memory database (also known as an in-memory database management system) is a type of database management system that primarily relies on main memory for computer data storage. It is contrasted with database management systems that employ a disk storage mechanism. In-memory databases are traditionally faster than disk storage databases because disk access is slower than memory access.

The core 206 determines whether event request corresponds to an LLI event or a standard event. If it corresponds to an LLI event, then the request is rerouted to a content service 208, which is a microservice-based stack that is backed by a document database. More particularly, a tenant authentication component 210 within the content service 208 acts to verify the tenant for the LLI request, by sending an OAuth token to OAuth service 212 for verification. Once verified, realm information is sent from the OAuth service 212 to the tenant authentication component 210, which then uses the realm information to fetch a tenant identification.

The tenant authentication component 210 then indicates the LLI request has been validated, and a content storage component 213 forwards the LLI request to a representational state transfer (REST) Application program Interface (API) 214, which then uses a tenant-specific in-memory database instance 216 (identified using the tenant identification) to connect to a tenant schema 218. The tenant schema 218 identifies content/bid data in a document database 220 as well as metadata in a relational database 222. This allows the REST API 214 to perform whatever operations are necessary to satisfy the LLI request using a combination of content/bid data and metadata. These operations may include Create, Read, Update and Delete (CRUD) operations.

Notably, the line item data itself are stored in the document database 220. There are two types of information provided for line items for an event: one from a procuring organization and another from supplier organizations who provide the bids for the line items. Thus, the data is semi-structured in nature, and varies on the terms provided by the procuring organization and the bid values provided by the suppliers. Since faster reads and writes are needed for the large amount of data in LLI events, a document database 220 is used instead of relying on the relational database 222 for such storage.

A document database is a non-relational database that stores information as documents (as opposed to as in tables, as in a relational database). A document typically stores information about one object, and any of its related metadata, as a record in the document database 220. Documents store data in field-value pairs. These values can be a variety of types and structures, including strings, numbers, dates, arrays, or objects. Documents can be stored in a variety of formats, although in one example embodiment the documents are stored as Javascript^{™} Object Notation (JSON) files. The documents may be grouped into collections in the document database 220.

If report generation is needed as part of the LLI request, then a report generation component can generate the report. Furthermore, content service 208 may also communicate data retrieved via the LLI requests to one or more other applications, such as an optimization workbench (OWB) 224, which can perform bid analysis and optimization scenarios.

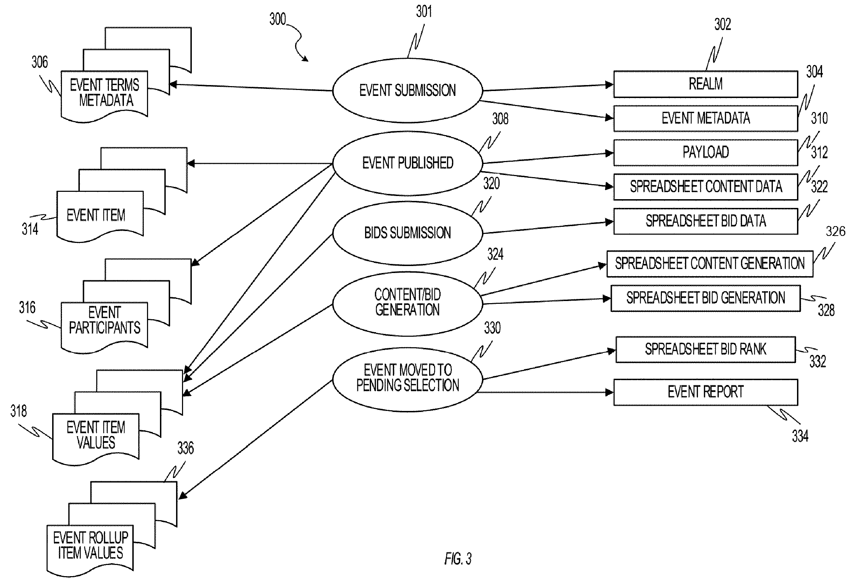

Figure 3 is a block diagram illustrating a data model 300 used by the document database 220, in an example embodiment. Here, an event submission event 301 may use realm information 302 and event metadata 304 from tables and create a document for each event term in collection 306. An event published event 308 may use payload information 310 and spreadsheet content data 312 to create a document for each event item in collection 314, as well as create a document for each event participant in collection 316, and a document for each event item value in collection 318. A bids submission event 320 may use spreadsheet bid data 322 to create a document for each event item value in collection 318. A content bid generation event 324 uses spreadsheet content generation data 326 and spreadsheet bid generation data 328 to create a document for each event item value in collection 318. Finally, an event moved to pending selection event 330 may use spreadsheet bid rank data 332 and event report data 334 to create a document for each event rollup item value in collection 336.

When an LLI event is received, it may be in the form of a large spreadsheet with rows representing each line item. Repetitive tasks like validation of each spreadsheet row, processing of each spreadsheet row, and transforming each spreadsheet row into a JSON document so that it can be saved in a document database may be performed concurrently (parallel processing) using, for example, a concurrent processing framework, such as Akka^{™}. Akka^{™} is a toolkit and runtime that simplifies the construction of concurrent and distributed applications on a virtual machine. It focuses on actor-based concurrency. Actor-based concurrency treats an actor as the universal primate of concurrent computation. In response to a message it receives, an actor can make local decisions, create more actors, send more messages, and determine how to respond to the next message received. Actors may also modify their own private state, but can only affect each other indirectly through messaging (removing the need for lock-based synchronization).

In an example embodiment, there are several concurrent threads in round robin fashion for achieving the above functionalities.

In an example embodiment, communications among the various components are performed asynchronously, via a message broker, rather than synchronously.

As mentioned above, the graphical user interface 202 may be implemented at server-side. For further efficiency, the graphical user interface 202 may utilize cursor-based pagination. Here, line items are on the vertical access and bid values are on the horizontal access, and a user may scroll vertically or horizontally using a cursor.

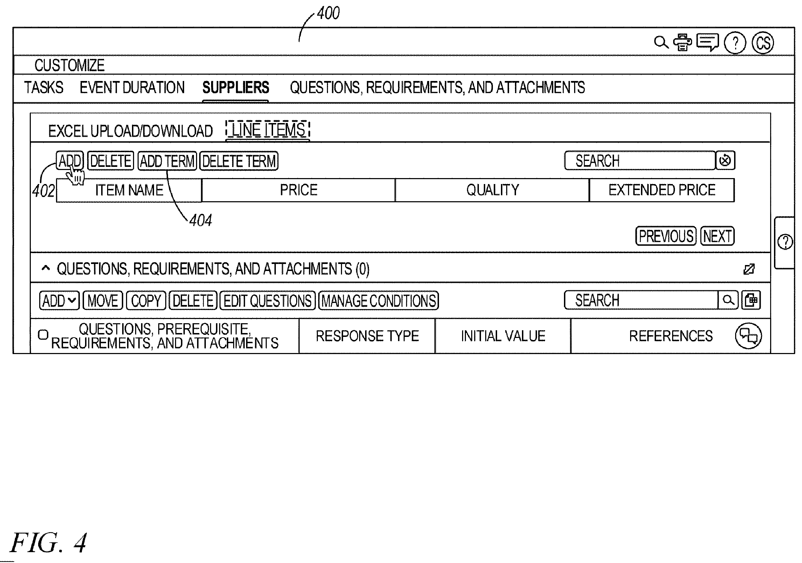

Figure 4 is a screen capture illustrating a graphical user interface 400 for adding line items to an LLI event, in accordance with an example embodiment. Here, the graphical user interface 400 provides the ability for a user to enter a line item by selecting an "add" button 402. Additionally, a term may be added to a line item by selecting an "add term" button 404.

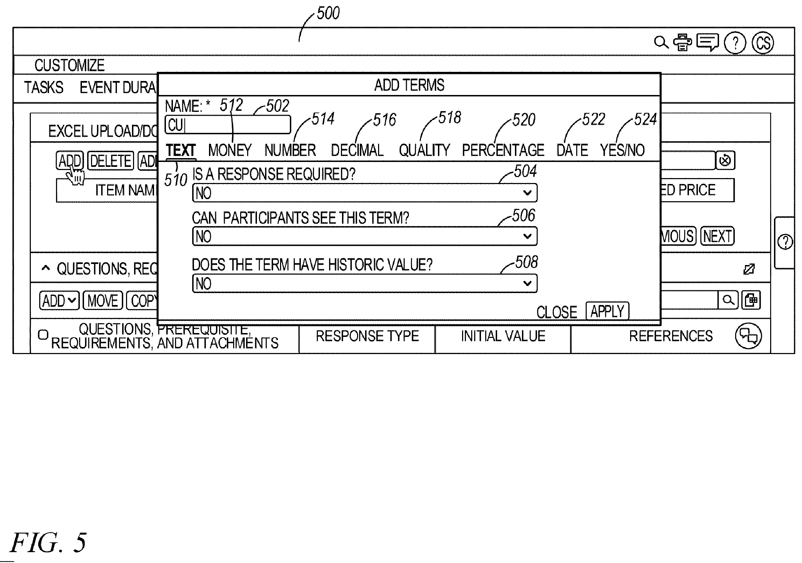

Figure 5 is a screen capture illustrating a graphical user interface 500 for adding terms to a line item of an LLI event, in accordance with an example embodiment. Here, the graphical user interface 500 provides the ability for a user to enter a name for a term in name field 502, as well as various aspects of the term in various drop downs 504, 506, 508 and buttons 510, 512, 514, 516, 518, 520, 522, and 524.

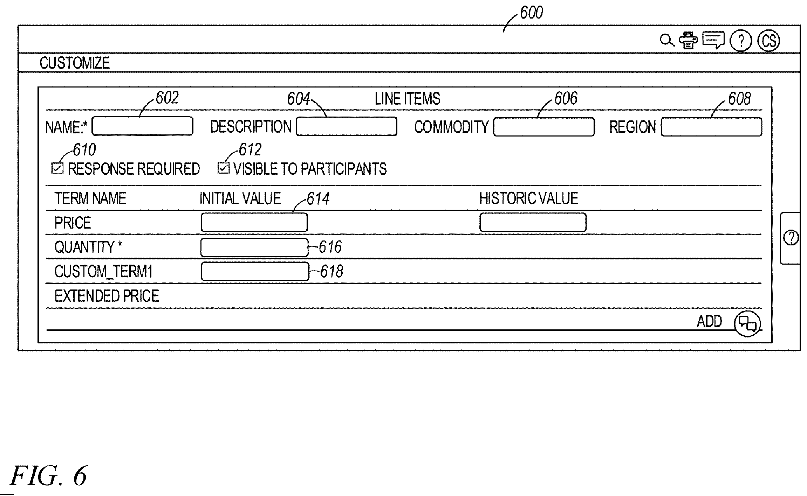

Figure 6 is a screen capture illustrating a graphical user interface 600 for adding line item information in accordance with an example embodiment. Here, the graphical user interface 600 provides the ability for a user to enter a name for a line item in name field 602, as well as a description 604, commodity 606, and region 608. Furthermore, checkboxes 610 and 612 allow the user to indicate whether a response is required and/or whether the line item is visible to participants, respectively. Additionally, initial values for various terms may be entered in fields 614, 616, and 618.

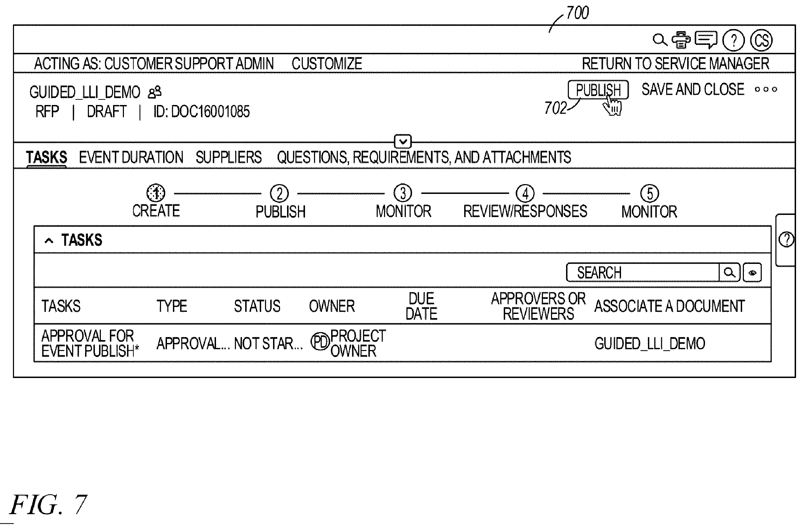

Figure 7 is a screen capture illustrating a graphical user interface 700 for publishing a created report, in accordance with an example embodiment. Here, the graphical user interface 700 permits a user to publish a created LLI event by pressing a publish button 702.

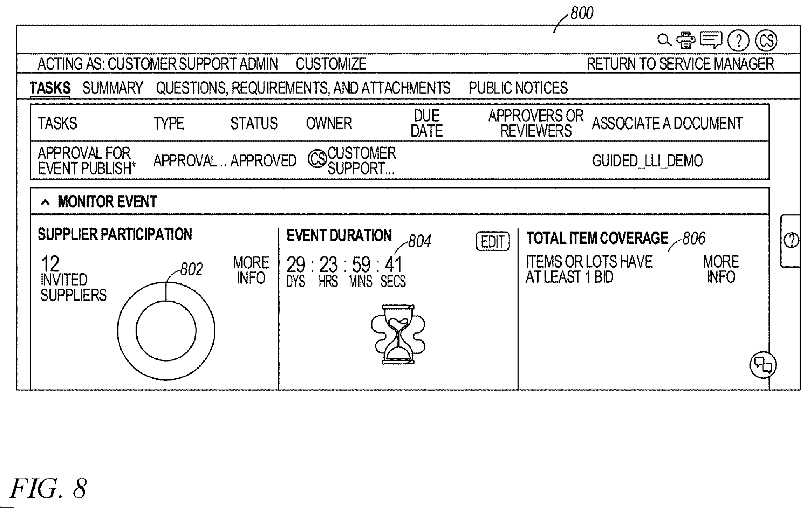

Figure 8 is a screen capture illustrating a graphical user interface 800 for viewing a report about data recorded via an LLI event, in accordance with an example embodiment. Here, the report may include a graph 802 of supplier participation, an indication 804 of how long the event has left (the event here being bidding), and an indication 806 of total item coverage. Other metrics may also be displayed in this graphical user interface 800, but are not pictured here for succinctness. Notably, all of this information may be retrieved from standard events (stored in a relational database) and/or LLI events (stored in a document database). As such, this graphical user interface 800 essentially integrates with existing graphical user interfaces that permit reports only from standard events (stored in a relational database) and not LLI events.

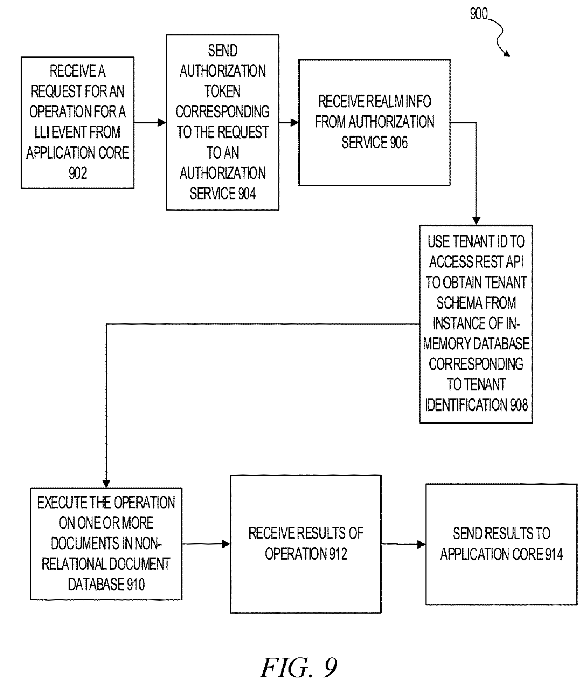

Figure 9 is a flow diagram illustrating a method 900 of handling a request for an operation corresponding to an LLI event, in accordance with an example embodiment. At operation 902, a request for an operation for a large line item (LLI) event is received from an application core, such as a sourcing application core. The request has been rerouted from the application core based on a determination that a request for an operation for an event corresponds to a LLI event, in accordance with a threshold defined for a large line item event at the application core. That threshold may specify a particular number of line items for an event, such as 2000, beyond which the event is considered a LLI event rather than a standard event.

At operation 904, an authorization token corresponding to the request for the operation for the LLI event is sent to an authorization service. At operation 906, realm information is received from the authorization service. The realm information may include a tenant identification. At operation 908, the tenant identification is used to access a REST API to obtain a tenant schema in an instance of an in-memory database corresponding to the tenant identification. The in-memory database contains both a non-relational document database and a relational database.

At operation 910, the operation is executed on one or more documents corresponding to the LLI event, the one or more documents stored in a collection in the non-relational document database. At operation 912, results of the operation are received from the non-relational document database. At operation 914, the results are sent to the application core for reporting to a user via a graphical user interface.

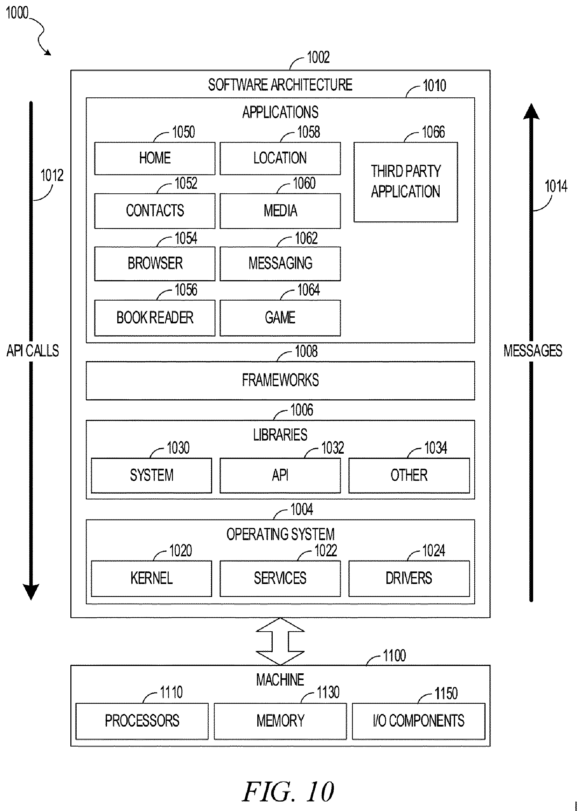

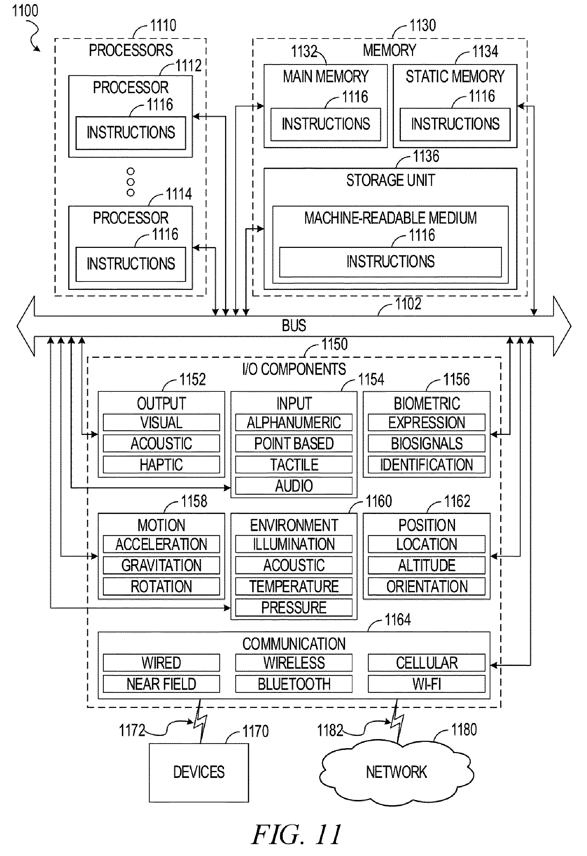

Figure 10 is a block diagram 1000 illustrating a software architecture 1002, which can be installed on any one or more of the devices described above. Figure 10 is merely a non-limiting example of a software architecture, and it will be appreciated that many other architectures can be implemented to facilitate the functionality described herein. In various embodiments, the software architecture 1002 is implemented by hardware such as a machine 1100 of Figure 11 that includes processors 1110, memory 1130, and input/output (I/O) components 1150. In this example architecture, the software architecture 1002 of Figure 10 can be conceptualized as a stack of layers where each layer may provide a particular functionality. For example, the software architecture 1002 includes layers such as an operating system 1004, libraries 1006, frameworks 1008, and applications 1010. Operationally, the applications 1010 invoke Application Program Interface (API) calls 1012 through the software stack and receive messages 1014 in response to the API calls 1012, consistent with some embodiments.

In various implementations, the operating system 1004 manages hardware resources and provides common services. The operating system 1004 includes, for example, a kernel 1020, services 1022, and drivers 1024. The kernel 1020 acts as an abstraction layer between the hardware and the other software layers, consistent with some embodiments. For example, the kernel 1020 provides memory management, processor management (e.g., scheduling), component management, networking, and security settings, among other functionalities. The services 1022 can provide other common services for the other software layers. The drivers 1024 are responsible for controlling or interfacing with the underlying hardware. For instance, the drivers 1024 can include display drivers, camera drivers, BLUETOOTH^{®} or BLUETOOTH^{®} Low-Energy drivers, flash memory drivers, serial communication drivers (e.g., Universal Serial Bus (USB) drivers), Wi-Fi^{®} drivers, audio drivers, power management drivers, and so forth.

In some embodiments, the libraries 1006 provide a low-level common infrastructure utilized by the applications 1010. The libraries 1006 can include system libraries 1030 (e.g., C standard library) that can provide functions such as memory allocation functions, string manipulation functions, mathematic functions, and the like. In addition, the libraries 1006 can include API libraries 1032 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two-dimensional (2D) and three-dimensional (3D) in a graphic context on a display), database libraries (e.g., SQLite to provide various relational database functions), web libraries (e.g., WebKit to provide web browsing functionality), and the like. The libraries 1006 can also include a wide variety of other libraries 1034 to provide many other APIs to the applications 1010.

The frameworks 1008 provide a high-level common infrastructure that can be utilized by the applications 1010. For example, the frameworks 1008 provide various graphical user interface (GUI) functions, high-level resource management, high-level location services, and so forth. The frameworks 1008 can provide a broad spectrum of other APIs that can be utilized by the applications 1010, some of which may be specific to a particular operating system 1004 or platform.

In an example embodiment, the applications 1010 include a home application 1050, a contacts application 1052, a browser application 1054, a book reader application 1056, a location application 1058, a media application 1060, a messaging application 1062, a game application 1064, and a broad assortment of other applications, such as a third-party application 1066. The applications 1010 are programs that execute functions defined in the programs. Various programming languages can be employed to create one or more of the applications 1010, structured in a variety of manners, such as object-oriented programming languages (e.g., Objective-C, Java, or C++) or procedural programming languages (e.g., C or assembly language). In a specific example, the third-party application 1066 (e.g., an application developed using the ANDROID^{™} or IOS^{™} software development kit (SDK) by an entity other than the vendor of the particular platform) may be mobile software running on a mobile operating system such as IOS^{™} ANDROID^{™}, WINDOWS^{®} Phone, or another mobile operating system. In this example, the third-party application 1066 can invoke the API calls 1012 provided by the operating system 1104 to facilitate functionality described herein.

Figure 11 illustrates a diagrammatic representation of a machine 1100 in the form of a computer system within which a set of instructions may be executed for causing the machine 1100 to perform any one or more of the methodologies discussed herein. Specifically, Figure 11 shows a diagrammatic representation of the machine 1100 in the example form of a computer system, within which instructions 1116 (e.g., software, a program, an application, an applet, an app, or other executable code) for causing the machine 1100 to perform any one or more of the methodologies discussed herein may be executed. For example, the instructions 1116 may cause the machine 1100 to execute the method of Figure 9. Additionally, or alternatively, the instructions 1116 may implement Figures 1-9 and so forth. The instructions 1116 transform the general, non-programmed machine 1100 into a particular machine 1100 programmed to carry out the described and illustrated functions in the manner described. In alternative embodiments, the machine 1100 operates as a standalone device or may be coupled (e.g., networked) to other machines. In a networked deployment, the machine 1100 may operate in the capacity of a server machine or a client machine in a server-client network environment, or as a peer machine in a peer-to-peer (or distributed) network environment. The machine 1100 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 1116, sequentially or otherwise, that specify actions to be taken by the machine 1100. Further, while only a single machine 1100 is illustrated, the term "machine" shall also be taken to include a collection of machines 1100 that individually or jointly execute the instructions 1116 to perform any one or more of the methodologies discussed herein.

The machine 1100 may include processors 1110, memory 1130, and I/O components 1150, which may be configured to communicate with each other such as via a bus 1102. In an example embodiment, the processors 1110 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 1112 and a processor 1114 that may execute the instructions 1116. The term "processor" is intended to include multi-core processors that may comprise two or more independent processors (sometimes referred to as "cores") that may execute instructions 1116 contemporaneously. Although Figure 11 shows multiple processors 1110, the machine 1100 may include a single processor 1112 with a single core, a single processor 1112 with multiple cores (e.g., a multi-core processor 1112), multiple processors 1112, 1114 with a single core, multiple processors 1112, 1114 with multiple cores, or any combination thereof.

The memory 1130 may include a main memory 1132, a static memory 1134, and a storage unit 1136, each accessible to the processors 1110 such as via the bus 1102. The main memory 1132, the static memory 1134, and the storage unit 1136 store the instructions 1116 embodying any one or more of the methodologies or functions described herein. The instructions 1116 may also reside, completely or partially, within the main memory 1132, within the static memory 1134, within the storage unit 1136, within at least one of the processors 1110 (e.g., within the processor's cache memory), or any suitable combination thereof, during execution thereof by the machine 1100.

The I/O components 1150 may include a wide variety of components to receive input, provide output, produce output, transmit information, exchange information, capture measurements, and so on. The specific I/O components 1150 that are included in a particular machine will depend on the type of machine. For example, portable machines such as mobile phones will likely include a touch input device or other such input mechanisms, while a headless server machine will likely not include such a touch input device. It will be appreciated that the I/O components 1150 may include many other components that are not shown in Figure 11. The I/O components 1150 are grouped according to functionality merely for simplifying the following discussion, and the grouping is in no way limiting. In various example embodiments, the I/O components 1150 may include output components 1152 and input components 1154. The output components 1152 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1154 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 1150 may include biometric components 1156, motion components 1158, environmental components 1160, or position components 1162, among a wide array of other components. For example, the biometric components 1156 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 1158 may include acceleration sensor components (e.g., accelerometer), gravitation sensor components, rotation sensor components (e.g., gyroscope), and so forth. The environmental components 1160 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 1162 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1150 may include communication components 1164 operable to couple the machine 1100 to a network 1180 or devices 1170 via a coupling 1182 and a coupling 1172, respectively. For example, the communication components 1164 may include a network interface component or another suitable device to interface with the network 1180. In further examples, the communication components 1164 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 1170 may be another machine or any of a wide variety of peripheral devices (e.g., coupled via a USB).

Moreover, the communication components 1164 may detect identifiers or include components operable to detect identifiers. For example, the communication components 1164 may include radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1164, such as location via Internet Protocol (IP) geolocation, location via Wi-Fi^{®} signal triangulation, location via detecting an NFC beacon signal that may indicate a particular location, and so forth.

The various memories (i.e., 1130, 1132, 1134, and/or memory of the processor(s) 1110) and/or the storage unit 1136 may store one or more sets of instructions 1116 and data structures (e.g., software) embodying or utilized by any one or more of the methodologies or functions described herein. These instructions (e.g., the instructions 1116), when executed by the processor(s) 1110, cause various operations to implement the disclosed embodiments.

As used herein, the terms "machine-storage medium," "device-storage medium," and "computer-storage medium" mean the same thing and may be used interchangeably. The terms refer to single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include nonvolatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 1180 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 1180 or a portion of the network 1180 may include a wireless or cellular network, and the coupling 1182 may be a Code Division Multiple Access (CDMA) connection, a Global System for Mobile communications (GSM) connection, or another type of cellular or wireless coupling. In this example, the coupling 1182 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 1116 may be transmitted or received over the network 1180 using a transmission medium via a network interface device (e.g., a network interface component included in the communication components 1164) and utilizing any one of several well-known transfer protocols (e.g., HTTP). Similarly, the instructions 1116 may be transmitted or received using a transmission medium via the coupling 1172 (e.g., a peer-to-peer coupling) to the devices 1170. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 1116 for execution by the machine 1100, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A system (200) comprising:
at least one hardware processor; and
a computer-readable medium storing instructions that, when executed by the at least one hardware processor, cause the at least one hardware processor to perform operations comprising:
receiving (902), from an application core (206), a request for operations related to a sourcing event that includes a list of line items, the sourcing event being created by a user, wherein the request has been rerouted from the application core (206) based on a determination that the request corresponds to a large line item (LLI) event rather than a standard event, in accordance with a threshold defined for a large line item event at the application core (206), wherein the LLI event is defined as an event involving line items being more than the threshold indicating a number of line items in a sourcing event;
transforming each line item into a Javascript Object Notation (JSON) document to be saved in a document database (220) concurrently using a concurrent processing framework;
executing (910) the operations on the documents corresponding to the LLI event, the documents stored as the JSON documents [30] in a collection (306; 314-318; 336) in the non-relational document database (220), wherein the executing (910) the operations includes executing the operations on the plurality of line items within the LLI event simultaneously via multiple concurrent threads, the operations including one or more of Create, Read, Update and Delete (CRUD) operations;
receiving (912) results of the operations from the non-relational document database (220); and
sending (914) the results to the application core (206) for reporting on the sourcing event to the user via a graphical user interface (202; 400-800).

2. The system of claim 1 or 2, wherein the sourcing event includes a plurality of line items, each line item having one or more terms (510-524) defined by a procuring organization and having fields for each of the terms (510-524) for completion by a bidding organization.

3. The system of any one of the preceding claims, wherein the operations further comprise:
sending (904) an authorization token corresponding to the request for the operations for the LLI event to an authorization service (212); and
receiving (906), from the authorization service (212), realm information (302).

4. The system of any one of the preceding claims, wherein the realm information (302) includes a tenant identification and wherein the operations further comprise:
using (908) the tenant identification to access the representational state transfer (REST) application program interface (API) (214) to obtain a tenant schema (218) in an instance of an in-memory database (216) corresponding to the tenant identification.

5. The system of any one of the preceding claims, wherein the in-memory database (216) contains the non-relational document database (220) and a relational database (222) used to store metadata (304) regarding the LLI event.

6. A method comprising:
receiving (902), from an application core (206), a request for operations related to a sourcing event that includes a list of line items, the sourcing event being created by a user, wherein the request has been rerouted from the application core (206) based on a determination that the request corresponds to a large line item (LLI) event rather than a standard event, in accordance with a threshold defined for a large line item event at the application core (206), wherein the LLI event is defined as an event involving line items being more than the threshold indicating a number of line items in a sourcing event;
transforming each line item into a Javascript Object Notation (JSON) document to be saved in a document database (220) concurrently using a concurrent processing framework;
executing (910) the operations on the documents corresponding to the LLI event, the documents stored as the JSON documents in a collection (306; 314-318; 336) in the non-relational document database (220), wherein the executing (910) the operations includes executing the operations on the plurality of line items within the LLI event simultaneously via multiple concurrent threads, the operations including one or more of Create, Read, Update and Delete (CRUD) operations;
receiving (912) results of the operation from the non-relational document database (220); and
sending (914) the results to the application core (206) for reporting on the sourcing event to the user via a graphical user interface (202; 400-800).

7. The method of claim 6, wherein the threshold indicates a number of line items in a sourcing event;
wherein the sourcing event optionally includes a plurality of line items, each line item having one or more terms (510-524) defined by a procuring organization and having fields for each of the terms (510-524) for completion by a bidding organization.

8. The method of claim 6 or 7, further comprising: sending (904) an authorization token corresponding to the request for the operation for the LLI event to an authorization service (212); and
receiving (906), from the authorization service (212), realm information (302).

9. The method of any one of claims 6 to 8, wherein the realm information (302) includes a tenant identification and wherein the method further comprises:
using (908) the tenant identification to access a representational state transfer (REST) application program interface (API) (214) to obtain a tenant schema (218) in an instance of an in-memory database (216) corresponding to the tenant identification;
wherein the in-memory database (216) preferably contains the non-relational document database (220) and a relational database (222) used to store metadata (304) regarding the LLI event.

10. A non-transitory machine-readable medium storing instructions which, when executed by one or more processors, cause the one or more processors to perform operations comprising:
receiving (902), from an application core (206), a request for operations related to a sourcing event that includes a list of line items, the sourcing event being created by a user, wherein the request has been rerouted from the application core (206) based on a determination that the request corresponds to a large line item (LLI) event rather than a standard event, in accordance with a threshold defined for a large line item event at the application core (206), wherein the LLI event is defined as an event involving line items being more than the threshold indicating a number of line items in a sourcing event;
transforming each line item into a Javascript Object Notation (JSON) document to be saved in a document database (220) concurrently using a concurrent processing framework;
executing (910) the operations on the documents corresponding to the LLI event, the documents stored as the JSON documents in a collection (306; 314-318; 336) in the non-relational document database (220), wherein the executing (910) the operations includes executing the operations on the plurality of line items within the LLI event simultaneously via multiple concurrent threads, the operations including one or more of Create, Read, Update and Delete (CRUD) operations;
receiving (912) results of the operation from the non-relational document database (220); and
sending (914) the results to the application core (206) for reporting on the sourcing event to the user via a graphical user interface (202; 400-800).

11. The non-transitory machine-readable medium of claim 10, wherein the threshold indicates a number of line items in a sourcing event;
wherein the sourcing event optionally includes a plurality of line items, each line item having one or more terms (510-524) defined by a procuring organization and having fields for each of the terms for completion by a bidding organization.

12. The non-transitory machine-readable medium of claim 10 or 11, wherein the operations further comprise:
sending (904) an authorization token corresponding to the request for the operation for the LLI event to an authorization service (212); and
receiving (906), from the authorization service (212), realm information (302).

13. The non-transitory machine-readable medium of any one of claims 10 to 12, wherein the realm information (302) includes a tenant identification and wherein the operations further comprise:
using (908) the tenant identification to access a representational state transfer (REST) application program interface (API) (214) to obtain a tenant schema (218) in an instance of an in-memory database (216) corresponding to the tenant identification;
wherein the in-memory database (216) preferably contains the non-relational document database (220) and a relational database (222) used to store metadata (304) regarding the LLI event.

## Patentansprüche

1. System (200), umfassend:
mindestens einen Hardwareprozessor; und
ein computerlesbares Medium, das Anweisungen speichert, die, wenn sie durch den mindestens einen Hardwareprozessor ausgeführt werden, bewirken, dass der mindestens eine Hardwareprozessor Vorgänge durchführt, umfassend:
Empfangen (902), von einem Anwendungskern (206), einer Anfrage für Vorgänge, die mit einem Beschaffungsereignis zusammenhängen, das eine Liste von Line Items umfasst, wobei das Beschaffungsereignis durch einen Benutzer erzeugt wird, wobei die Anfrage von dem Anwendungskern (206) auf der Basis einer Bestimmung umgeleitet worden ist, dass die Anfrage gemäß einer Schwelle, die für ein großes Line Item-Ereignis bei dem Anwendungskern (206) festgelegt ist, einem großen Line Item (LLI)-Ereignis anstatt einem Standardereignis entspricht, wobei das LLI-Ereignis als ein Ereignis festgelegt ist, das Line Items umfasst, die mehr als die Schwelle sind, die eine Anzahl von Line Items in einem Beschaffungsereignis anzeigt;
Umwandeln von jedem Line Item in ein "Javascript Object Notation" (JSON)-Dokument, das in einer Dokumentdatenbank (220) gleichzeitig unter Verwendung einer gleichzeitigen Verarbeitungsstruktur gespeichert werden soll;
Ausführen (910) der Vorgänge mit den Dokumenten, die dem LLI-Ereignis entsprechen, wobei die Dokumente als die JSON-Dokumente [30] in einer Sammlung (306; 314-318; 336) in der nicht-relationalen Dokumentdatenbank (220) gespeichert sind, wobei das Ausführen (910) der Vorgänge das Ausführen der Vorgänge mit der Mehrzahl von Line Items innerhalb des LLI-Ereignisses gleichzeitig über mehrere gleichzeitige Threads umfasst, wobei die Vorgänge einen oder mehrere von Create, Read, Update und Delete (CRUD)-Vorgängen umfassen;
Empfangen (912) von Ergebnissen der Vorgänge von der nicht-relationalen Dokumentdatenbank (220); und
Senden (914) der Ergebnisse zu dem Anwendungskern (206) zum Berichten über das Beschaffungsereignis an den Benutzer über eine graphische Benutzerschnittstelle (202; 400-800).

2. System nach Anspruch 1 oder 2, wobei das Beschaffungsereignis eine Mehrzahl von Line Items umfasst, wobei jedes Line Item einen oder mehrere Begriff(e) (510-524) aufweist, der/die durch eine Bereitstellungsorganisation festgelegt ist/sind, und Felder für jeden der Begriffe (510-524) zum Vervollständigen durch eine Bieterorganisation aufweist/aufweisen.

3. System nach einem der vorhergehenden Ansprüche, wobei die Vorgänge ferner umfassen:
Senden (904) eines Authorisierungstoken, welcher der Anfrage für die Vorgänge für das LLI-Ereignis entspricht, zu einem Authorisierungsdienst (212); und
Empfangen (906), von dem Authorisierungsdienst (212), von Realm-Informationen (302).

4. System nach einem der vorhergehenden Ansprüche, wobei die Realm-Informationen (302) eine Tenantidentifizierung umfassen und wobei die Vorgänge ferner umfassen:
Verwenden (908) der Tenantidentifizierung zum Zugreifen auf die Repräsentationszustandsübertragung (REST)-Anwendungsprogrammschnittstelle (API) (214) zum Erhalten eines Tenantschemas (218) in einer Instanz einer In-Memory-Datenbank (216), die der Tenantidentifizierung entspricht.

5. System nach einem der vorhergehenden Ansprüche, wobei die In-Memory-Datenbank (216) die nicht-relationale Dokumentdatenbank (220) und eine relationale Datenbank (222) enthält, die zum Speichern von Metadaten (304) bezüglich des LLI-Ereignisses verwendet wird.

6. Verfahren, umfassend:
Empfangen (902), von einem Anwendungskern (206), einer Anfrage für Vorgänge, die mit einem Beschaffungsereignis zusammenhängen, das eine Liste von Line Items umfasst, wobei das Beschaffungsereignis durch einen Benutzer erzeugt wird, wobei die Anfrage von dem Anwendungskern (206) auf der Basis einer Bestimmung umgeleitet worden ist, dass die Anfrage gemäß einer Schwelle, die für ein großes Line Item-Ereignis bei dem Anwendungskern (206) festgelegt ist, einem großen Line Item (LLI)-Ereignis anstatt einem Standardereignis entspricht, wobei das LLI-Ereignis als ein Ereignis festgelegt ist, das Line Items umfasst, die mehr als die Schwelle sind, die eine Anzahl von Line Items in einem Beschaffungsereignis anzeigt;
Umwandeln von jedem Line Item in ein "Javascript Object Notation" (JSON)-Dokument, das in einer Dokumentdatenbank (220) gleichzeitig unter Verwendung einer gleichzeitigen Verarbeitungsstruktur gespeichert werden soll;
Ausführen (910) der Vorgänge mit den Dokumenten, die dem LLI-Ereignis entsprechen, wobei die Dokumente als die JSON-Dokumente in einer Sammlung (306; 314-318; 336) in der nicht-relationalen Dokumentdatenbank (220) gespeichert sind, wobei das Ausführen (910) der Vorgänge das Ausführen der Vorgänge mit der Mehrzahl von Line Items innerhalb des LLI-Ereignisses gleichzeitig über mehrere gleichzeitige Threads umfasst, wobei die Vorgänge einen oder mehrere von Create, Read, Update und Delete (CRUD)-Vorgängen umfassen;
Empfangen (912) von Ergebnissen der Vorgänge von der nicht-relationalen Dokumentdatenbank (220); und
Senden (914) der Ergebnisse zu dem Anwendungskern (206) zum Berichten über das Beschaffungsereignis an den Benutzer über eine graphische Benutzerschnittstelle (202; 400-800).

7. Verfahren nach Anspruch 6, wobei die Schwelle eine Anzahl von Line Items in einem Beschaffungsereignis anzeigt;
wobei das Beschaffungsereignis gegebenenfalls eine Mehrzahl von Line Items umfasst, wobei jedes Line Item einen oder mehrere Begriff(e) (510-524) aufweist, der/die durch eine Bereitstellungsorganisation festgelegt ist/sind, und Felder für jeden der Begriffe (510-524) zum Vervollständigen durch eine Bieterorganisation aufweist.

8. Verfahren nach Anspruch 6 oder 7, ferner umfassend: Senden (904) eines Authorisierungstoken, welcher der Anfrage für die Vorgänge für das LLI-Ereignis entspricht, zu einem Authorisierungsdienst (212); und
Empfangen (906), von dem Authorisierungsdienst (212), von Realm-Informationen (302).

9. Verfahren nach einem der Ansprüche 6 bis 8, wobei die Realm-Informationen (302) eine Tenantidentifizierung umfassen und wobei die Vorgänge ferner umfassen:
Verwenden (908) der Tenantidentifizierung zum Zugreifen auf die Repräsentationszustandsübertragung (REST)-Anwendungsprogrammschnittstelle (API) (214) zum Erhalten eines Tenantschemas (218) in einer Instanz einer In-Memory-Datenbank (216), die der Tenantidentifizierung entspricht;
wobei die In-Memory-Datenbank (216) vorzugsweise die nicht-relationale Dokumentdatenbank (220) und eine relationale Datenbank (222) enthält, die zum Speichern von Metadaten (304) bezüglich des LLI-Ereignisses verwendet wird.

10. Nicht-flüchtiges, maschinenlesbares Medium, das Anweisungen speichert, die, wenn sie durch einen oder mehrere Prozessor(en) ausgeführt werden, bewirken, dass der eine oder die mehreren Prozessor(en) Vorgänge durchführt/durchführen, umfassend:
Empfangen (902), von einem Anwendungskern (206), einer Anfrage für Vorgänge, die mit einem Beschaffungsereignis zusammenhängen, das eine Liste von Line Items umfasst, wobei das Beschaffungsereignis durch einen Benutzer erzeugt wird, wobei die Anfrage von dem Anwendungskern (206) auf der Basis einer Bestimmung umgeleitet worden ist, dass die Anfrage gemäß einer Schwelle, die für ein großes Line Item-Ereignis bei dem Anwendungskern (206) festgelegt ist, einem großen Line Item (LLI)-Ereignis anstatt einem Standardereignis entspricht, wobei das LLI-Ereignis als ein Ereignis festgelegt ist, das Line Items umfasst, die mehr als die Schwelle sind, die eine Anzahl von Line Items in einem Beschaffungsereignis anzeigt;
Umwandeln von jedem Line Item in ein "Javascript Object Notation" (JSON)-Dokument, das in einer Dokumentdatenbank (220) gleichzeitig unter Verwendung einer gleichzeitigen Verarbeitungsstruktur gespeichert werden soll;
Ausführen (910) der Vorgänge mit den Dokumenten, die dem LLI-Ereignis entsprechen, wobei die Dokumente als die JSON-Dokumente in einer Sammlung (306; 314-318; 336) in der nicht-relationalen Dokumentdatenbank (220) gespeichert sind, wobei das Ausführen (910) der Vorgänge das Ausführen der Vorgänge mit der Mehrzahl von Line Items innerhalb des LLI-Ereignisses gleichzeitig über mehrere gleichzeitige Threads umfasst, wobei die Vorgänge einen oder mehrere von Create, Read, Update und Delete (CRUD)-Vorgängen umfassen;
Empfangen (912) von Ergebnissen der Vorgänge von der nicht-relationalen Dokumentdatenbank (220); und
Senden (914) der Ergebnisse zu dem Anwendungskern (206) zum Berichten über das Beschaffungsereignis an den Benutzer über eine graphische Benutzerschnittstelle (202; 400-800).

11. Nicht-flüchtiges, maschinenlesbares Medium nach Anspruch 10, wobei die Schwelle eine Anzahl von Line Items in einem Beschaffungsereignis anzeigt;
wobei das Beschaffungsereignis gegebenenfalls eine Mehrzahl von Line Items umfasst, wobei jedes Line Item einen oder mehrere Begriff(e) (510-524) aufweist, der/die durch eine Bereitstellungsorganisation festgelegt ist/sind, und Felder für jeden der Begriffe (510-524) zum Vervollständigen durch eine Bieterorganisation aufweist.

12. Nicht-flüchtiges, maschinenlesbares Medium nach Anspruch 10 oder 11, wobei die Vorgänge ferner umfassen:
Senden (904) eines Authorisierungstoken, welcher der Anfrage für die Vorgänge für das LLI-Ereignis entspricht, zu einem Authorisierungsdienst (212); und
Empfangen (906), von dem Authorisierungsdienst (212), von Realm-Informationen (302).

13. Nicht-flüchtiges, maschinenlesbares Medium nach einem der Ansprüche 10 bis 12, wobei die Realm-Informationen (302) eine Tenantidentifizierung umfassen und wobei die Vorgänge ferner umfassen:
Verwenden (908) der Tenantidentifizierung zum Zugreifen auf eine Repräsentationszustandsübertragung (REST)-Anwendungsprogrammschnittstelle (API) (214) zum Erhalten eines Tenantschemas (218) in einer Instanz einer In-Memory-Datenbank (216), die der Tenantidentifizierung entspricht;
wobei die In-Memory-Datenbank (216) vorzugsweise die nicht-relationale Dokumentdatenbank (220) und eine relationale Datenbank (222) enthält, die zum Speichern von Metadaten (304) bezüglich des LLI-Ereignisses verwendet wird.

## Revendications

1. Un système (200) comprenant :
au moins un processeur matériel ; et
un support lisible par ordinateur stockant des instructions qui, lorsqu'elles sont exécutées par le au moins un processeur matériel, amènent le au moins un processeur matériel à effectuer des opérations comprenant le fait de :
recevoir (902), de la part d'un noyau d'application (206), une requête d'opérations liées à un événement de sourcing qui inclut une liste de postes (*line items*), l'événement de sourcing étant créé par un utilisateur, sachant que la requête a été réacheminée à partir du noyau d'application (206) sur la base d'une détermination selon laquelle la requête correspond à un événement de postes volumineux (*Large Line Item -* LLI) plutôt qu'à un événement standard, conformément à un seuil défini pour un événement de postes volumineux au niveau du noyau d'application (206), sachant que l'événement LLI est défini comme un événement impliquant des postes dépassant le seuil désignant un nombre de postes dans un événement de sourcing ;
transformer chaque poste en un document JSON (*Javascript Object Notation*) destiné à être sauvegardé dans une base de données de documents (220) de manière concurrente (*concurrently*) à l'aide d'un cadre de traitement parallèle ;
exécuter (910) les opérations sur les documents correspondant à l'événement LLI, les documents étant stockés sous forme de documents JSON [30] dans une collection (306 ; 314-318 ; 336) dans la base de données de documents non relationnelle (220), sachant que l'exécution (910) des opérations inclut l'exécution simultanée, via plusieurs threads concurrents, des opérations sur la pluralité de postes contenus dans l'événement LLI, les opérations incluant une ou plusieurs des opérations : Créer, Lire, Mettre à jour et Supprimer (*Create, Read, Update and Delete* - CRUD) ;
recevoir (912) des résultats des opérations de la part de la base de données de documents non relationnelle (220) ; et de
envoyer (914) les résultats au noyau d'application (206) pour fournir un rapport sur l'événement de sourcing à l'utilisateur via une interface utilisateur graphique (202 ; 400-800).

2. Le système d'après la revendication 1 ou 2, sachant que l'événement de sourcing inclut une pluralité de postes, chaque poste présentant un ou plusieurs termes (510-524) définis par une organisation acheteuse (*procuring organization*) et présentant des champs pour chacun des termes (510-524) à compléter par une organisation soumissionnaire (*bidding organization*).

3. Le système d'après l'une quelconque des revendications précédentes, sachant que les opérations comprennent en outre le fait de :
envoyer (904) un jeton d'autorisation correspondant à la requête d'opérations relatives à l'événement LLI à un service d'autorisation (212) ; et de
recevoir (906), de la part du service d'autorisation (212), des informations de domaine (*realm*) (302).

4. Le système d'après l'une quelconque des revendications précédentes, sachant que les informations de domaine (302) incluent un identifiant de locataire (*tenant*) et sachant que les opérations comprennent en outre le fait de :
utiliser (908) l'identifiant de locataire pour accéder à une interface de programme d'application (API) de transfert d'état représentatif (*representational state transfer -* REST) (214) afin d'obtenir un schéma de locataire (218) dans une instance d'une base de données en mémoire (216) correspondant à l'identifiant de locataire.

5. Le système d'après l'une quelconque des revendications précédentes, sachant que la base de données en mémoire (216) contient la base de données de documents non relationnelle (220) et une base de données relationnelle (222) utilisée pour stocker des métadonnées (304) concernant l'événement LLI.

6. Un procédé comprenant le fait de :
recevoir (902), de la part d'un noyau d'application (206), une requête d'opérations liées à un événement de sourcing qui inclut une liste de postes (*line items*), l'événement de sourcing étant créé par un utilisateur, sachant que la requête a été réacheminée à partir du noyau d'application (206) sur la base d'une détermination selon laquelle la requête correspond à un événement de postes volumineux (*Large Line Item -* LLI) plutôt qu'à un événement standard, conformément à un seuil défini pour un événement de postes volumineux au niveau du noyau d'application (206), sachant que l'événement LLI est défini comme un événement impliquant des postes dépassant le seuil désignant un nombre de postes dans un événement de sourcing ;
transformer chaque poste en un document JSON (*Javascript Object Notation*) destiné à être sauvegardé dans une base de données de documents (220) de manière concurrente (*concurrently*) à l'aide d'un cadre de traitement parallèle ;
exécuter (910) les opérations sur les documents correspondant à l'événement LLI, les documents étant stockés sous forme de documents JSON dans une collection (306 ; 314-318 ; 336) dans la base de données de documents non relationnelle (220), sachant que l'exécution (910) des opérations inclut l'exécution simultanée, via plusieurs threads concurrents, des opérations sur la pluralité de postes contenus dans l'événement LLI, les opérations incluant une ou plusieurs des opérations : Créer, Lire, Mettre à jour et Supprimer (*Create, Read, Update and Delete* - CRUD) ;
recevoir (912) des résultats de l'opération de la part de la base de données de documents non relationnelle (220) ; et de
envoyer (914) les résultats au noyau d'application (206) pour fournir un rapport sur l'événement de sourcing à l'utilisateur via une interface utilisateur graphique (202 ; 400-800).

7. Le procédé d'après la revendication 6, sachant que le seuil indique un nombre de postes dans un événement de sourcing ;
sachant que l'événement de sourcing inclut facultativement une pluralité de postes, chaque poste présentant un ou plusieurs termes (510-524) définis par une organisation acheteuse (*procuring organization*) et présentant des champs pour chacun des termes (510-524) à compléter par une organisation soumissionnaire (*bidding organization*).

8. Le procédé d'après la revendication 6 ou 7, comprenant en outre le fait de : envoyer (904) un jeton d'autorisation correspondant à la requête d'opérations relatives à l'événement LLI à un service d'autorisation (212) ; et de
recevoir (906), de la part du service d'autorisation (212), des informations de domaine (*realm*) (302).

9. Le procédé d'après l'une quelconque des revendications de 6 à 8, sachant que les informations de domaine (302) incluent un identifiant de locataire (*tenant*) et sachant que le procédé comprend en outre le fait de :
utiliser (908) l'identifiant de locataire pour accéder à une interface de programme d'application (API) de transfert d'état représentatif (*representational state transfer -* REST) (214) afin d'obtenir un schéma de locataire (218) dans une instance d'une base de données en mémoire (216) correspondant à l'identifiant de locataire.
sachant que la base de données en mémoire (216) contient la base de données de documents non relationnelle (220) et une base de données relationnelle (222) utilisée pour stocker des métadonnées (304) concernant l'événement LLI.

10. Un support non transitoire lisible par machine stockant des instructions qui, lorsqu'elles sont exécutées par un ou plusieurs processeurs, amènent le ou les processeurs à effectuer des opérations comprenant le fait de :
recevoir (902), de la part d'un noyau d'application (206), une requête d'opérations liées à un événement de sourcing qui inclut une liste de postes (*line items*), l'événement de sourcing étant créé par un utilisateur, sachant que la requête a été réacheminée à partir du noyau d'application (206) sur la base d'une détermination selon laquelle la requête correspond à un événement de postes volumineux (*Large Line Item -* LLI) plutôt qu'à un événement standard, conformément à un seuil défini pour un événement de postes volumineux au niveau du noyau d'application (206), sachant que l'événement LLI est défini comme un événement impliquant des postes dépassant le seuil désignant un nombre de postes dans un événement de sourcing ;
transformer chaque poste en un document JSON (*Javascript Object Notation*) destiné à être sauvegardé dans une base de données de documents (220) de manière concurrente (*concurrently*) à l'aide d'un cadre de traitement parallèle ;
exécuter (910) les opérations sur les documents correspondant à l'événement LLI, les documents étant stockés sous forme de documents JSON dans une collection (306 ; 314-318 ; 336) dans la base de données de documents non relationnelle (220), sachant que l'exécution (910) des opérations inclut l'exécution simultanée, via plusieurs threads concurrents, des opérations sur la pluralité de postes contenus dans l'événement LLI, les opérations incluant une ou plusieurs des opérations : Créer, Lire, Mettre à jour et Supprimer (*Create, Read, Update and Delete* - CRUD) ;
recevoir (912) des résultats de l'opération de la part de la base de données de documents non relationnelle (220) ; et de
envoyer (914) les résultats au noyau d'application (206) pour fournir un rapport sur l'événement de sourcing à l'utilisateur via une interface utilisateur graphique (202 ; 400-800).

11. Le support non transitoire lisible par machine d'après la revendication 10, sachant que le seuil indique un nombre de postes dans un événement de sourcing ;
sachant que l'événement de sourcing inclut facultativement une pluralité de postes, chaque poste présentant un ou plusieurs termes (510-524) définis par une organisation acheteuse (*procuring organization*) et présentant des champs pour chacun des termes (510-524) à compléter par une organisation soumissionnaire (*bidding organization*).

12. Le support lisible par machine non transitoire d'après la revendication 10 ou 11, sachant que les opérations comprennent en outre le fait de :
envoyer (904) un jeton d'autorisation correspondant à la requête d'opérations relatives à l'événement LLI à un service d'autorisation (212) ; et de
recevoir (906), de la part du service d'autorisation (212), des informations de domaine (*realm*) (302).

13. Le support non transitoire lisible par machine d'après l'une quelconque des revendications de 10 à 12, sachant que les informations de domaine (302) incluent un identifiant de locataire (*tenant*) et sachant que les opérations comprennent en outre le fait de :
utiliser (908) l'identifiant de locataire pour accéder à une interface de programme d'application (API) de transfert d'état représentatif (*representational state transfer -* REST) (214) afin d'obtenir un schéma de locataire (218) dans une instance d'une base de données en mémoire (216) correspondant à l'identifiant de locataire.
sachant que la base de données en mémoire (216) contient de préférence la base de données de documents non relationnelle (220) et une base de données relationnelle (222) utilisée pour stocker des métadonnées (304) concernant l'événement LLI.
